# DEMANDE DE BREVET EUROPEEN

(11) **EP 4 501 770 A1**
(43) Date de publication de la demande: **05.02.2025**
(21) Numéro de dépôt: 24191766.5
(22) Date de dépôt: 30.07.2024
(51) Int. Cl.: B62M 6/45

(54) **PROCEDE DE CONTRÔLE D'UN GROUPE MOTOPROPULSEUR, GROUPE MOTOPROPULSEUR ET VEHICULE A PEDALES**

(30) Priorité: 01.08.2023 BE 202305641
(71) Demandeur: E2 Drives, 1300 Wavre (BE)
(72) Inventeur: DELEVAL, Christophe, 1300 Wavre (BE); ANTOONS, Jérôme, 1300 Wavre (BE)
(74) Mandataire: Gevers Patents

(57) **Abrégé**

L'invention se rapporte à un procédé de contrôle d'un groupe motopropulseur d'un ensemble de propulsion de véhicule à pédales ayant un premier moteur et un deuxième moteur. Le procédé comprend une étape d'interruption du pédalage puis une reprise de pédalage par un utilisateur, une étape de calcul d'une première vitesse en un point défini de l'ensemble de propulsion, en aval du système différentiel, en fonction de la vitesse du premier moteur et du deuxième moteur, une étape de calcul d'une deuxième vitesse au point défini de l'ensemble de propulsion en fonction d'une mesure de la vitesse du véhicule, une étape de calcul d'une différence entre la première vitesse et la deuxième vitesse, une étape de contrôle d'un premier moteur du groupe motopropulseur par une unité de contrôle, l'unité de contrôle contrôlant le premier moteur en vitesse, une étape de contrôle du deuxième moteur par l'unité de contrôle avec une consigne de couple inférieur en valeur absolue au couple correspondant au niveau d'assistance lorsque la différence entre la première vitesse et de la deuxième vitesse est au-dessus d'un certain seuil, et une étape de contrôle du deuxième moteur par l'unité de contrôle avec une consigne de couple correspondant au niveau d'assistance que lorsque la différence entre la première vitesse et de la deuxième vitesse est en-dessous d'un certain seuil. L'invention concerne aussi un groupe motopropulseur et un véhicule à pédales.

## Description

### Domaine technique

La présente invention concerne un procédé de contrôle d'un groupe motopropulseur, un groupe motopropulseur et un véhicule à pédales.

### Art antérieur

Des groupes motopropulseurs et des procédés de contrôle de groupe motopropulseur sont connus de l'art antérieur. Par exemple, les documents WO2013/160477, WO2016/034574, WO2019/043123 décrivent des groupes motopropulseurs et des procédés de contrôle. Également, les documents US5375676, WO2005/007439, EP3068683, US9546731 décrivent des groupes motopropulseurs et des procédés de contrôle mais dont le fonctionnement des groupes motopropulseurs n'est pas satisfaisant et dont le procédé de contrôle des groupes motopropulseurs ne permet pas une reprise de pédalage fluide.

Il y a un besoin pour un procédé de contrôle d'un groupe motopropulseur de véhicule à pédales permettant une reprise de pédalage fluide.

### Exposé de l'invention

À cet effet, l'invention propose un procédé de contrôle d'un groupe motopropulseur d'un ensemble de propulsion de véhicule à pédales, le groupe motopropulseur comprenant :
- Un système différentiel comprenant un premier élément d'entrée, un deuxième élément d'entrée et un élément de sortie,
- Un premier moteur relié au premier élément d'entrée,
- Un deuxième moteur relié au système différentiel,
- Une unité de contrôle apte à contrôler le premier moteur selon une consigne de vitesse et apte à contrôler le deuxième moteur selon une consigne de couple correspondant à un niveau d'assistance,
- Un corps d'entrée entraîné par un pédalier, le corps d'entrée étant relié au deuxième élément d'entrée du système différentiel,
- Un corps de sortie entraîné en rotation par l'élément de sortie du système différentiel,
- Une roue libre entre l'élément de sortie du système différentiel et une roue arrière du véhicule à pédales, la roue libre est apte à coupler ou découpler la roue arrière et le pédalier,
le procédé comprenant
- Une interruption du pédalage puis une reprise de pédalage par le cycliste,
- Un calcul d'une première vitesse en un point défini de l'ensemble de propulsion, en aval du système différentiel, en fonction de la vitesse du premier moteur et du deuxième moteur,
- Un calcul d'une deuxième vitesse au point défini de l'ensemble de propulsion en fonction d'une mesure de la vitesse du véhicule,
- Un calcul d'une différence entre la première vitesse et la deuxième vitesse,
- Un contrôle du premier moteur par l'unité de contrôle, l'unité de contrôle contrôlant le premier moteur en vitesse,
- Un contrôle du deuxième moteur par l'unité de contrôle avec une consigne de couple inférieur en valeur absolue au couple correspondant au niveau d'assistance lorsque la différence entre la première vitesse et de la deuxième vitesse est au-dessus d'un certain seuil,
- Un contrôle du deuxième moteur par l'unité de contrôle avec une consigne de couple correspondant au niveau d'assistance que lorsque la différence entre la première vitesse et de la deuxième vitesse est en-dessous d'un certain seuil.

Selon une variante, lorsque la différence entre la première vitesse et de la deuxième vitesse est au-dessus d'un certain seuil, la consigne de couple est à un couple nul.

Selon une variante, le contrôle du premier moteur est adapté pour accélérer la réduction de l'écart entre la consigne de vitesse et la valeur réelle de la vitesse du premier moteur.

Selon une variante, la deuxième vitesse est calculée par l'unité de contrôle grâce à un ou des capteurs de roue du véhicule.

Selon une variante, la première vitesse du véhicule est calculée par l'unité de contrôle sur base des vitesses de rotation du premier moteur et du deuxième moteur.

Selon une variante, la reprise de pédalage correspond au moment où le cycliste applique à nouveau une action sur le pédalier.

Selon une variante, le système différentiel du groupe motopropulseur est choisi dans le groupe comprenant :
- un train épicycloïdal avec un planétaire, une couronne et un porte-satellite, le premier élément d'entrée étant le planétaire, le deuxième élément d'entrée étant la couronne et l'élément de sortie étant le porte-satellite, ou le deuxième élément d'entrée étant le porte-satellite et l'élément de sortie étant la couronne,
- un train cycloïdal avec une couronne, une excentrique d'excitation, une roue, des excentriques de transfert et un porte excentrique de transfert, le premier élément d'entrée étant l'excentrique d'excitation, le deuxième élément d'entrée étant la couronne et l'élément de sortie étant le porte excentrique de transfert, ou le deuxième élément d'entrée étant le porte excentrique de transfert et l'élément de sortie étant la couronne,
- un train cycloïdal comprenant une couronne, une excentrique d'excitation, une roue à double denture et un pignon, le premier élément d'entrée étant l'excentrique d'excitation, le deuxième élément d'entrée étant la couronne et l'élément de sortie étant le pignon, ou le deuxième élément d'entrée étant le pignon et l'élément de sortie étant la couronne,
- un train harmonique comprenant une couronne, un générateur d'onde, une roue flexible, le premier élément d'entrée étant le générateur d'onde, le deuxième élément d'entrée étant la couronne et l'élément de sortie étant roue flexible, ou le deuxième élément d'entrée étant la roue flexible et l'élément de sortie étant la couronne.

Selon une variante, la différence entre la première vitesse et la deuxième vitesse renseigne sur l'état de couplage ou de découplage de la roue libre.

Selon une variante, le deuxième moteur est relié au deuxième élément d'entrée du système différentiel ou à l'élément de sortie du système différentiel.

Selon une variante, le pédalier est relié au deuxième élément d'entrée.

L'invention se rapport aussi à un groupe motopropulseur pour un véhicule à pédales, le groupe motopropulseur étant apte à mettre en oeuvre le procédé tel que décrit précédemment.

L'invention se rapport aussi à un véhicule à pédales, comprenant l'ensemble de propulsion comportant le groupe motopropulseur tel que décrit précédemment.

Selon une variante, le véhicule comprend un pédalier, le groupe motoréducteur étant au niveau du pédalier.

Selon une variante, le véhicule comprend au moins une roue arrière, le groupe motoréducteur étant au niveau de l'axe de rotation de la roue arrière.

Dans le cadre du présent document, l'indication successive d'étapes de procédé ne signifie pas nécessairement que les étapes se produisent les unes après les autres, mais possiblement en parallèle.

Dans le cadre du présent document, deux éléments connectés ou reliés peuvent être connectés ou reliés directement ou indirectement. Ils peuvent, par exemple, être engrenés directement ou indirectement via au moins une roue dentée intermédiaire, une courroie et/ou un galet.

Dans le cadre du présent document, les termes « entrée » et « sortie » doivent être compris dans le sens d'une entrée et d'une sortie dans une chaîne cinématique qu'est l'ensemble de propulsion. Une entrée est préférentiellement une entrée en puissance mécanique et une sortie est préférentiellement une sortie en puissance mécanique.

Dans le cadre du présent document, un élément d'engrenage peut par exemple être une roue dentée ou une pluralité de roues dentées couplées mécaniquement ou engrenées entre elles.

Dans le cadre du présent document, un élément "agencé de façon à tourner autour d'un axe de rotation" est de préférence un élément essentiellement symétrique autour de cet axe.

Dans le cadre du présent document, un "rapport fixe" entre deux objets ou éléments signifie que leurs vitesses de rotation sont dans un rapport constant.

Dans le cadre du présent document, le « rapport de vitesse du groupe motopropulseur » désigne le rapport de vitesse existant entre un corps de sortie et un corps d'entrée.

Dans le cadre du présent document, le « niveau d'assistance du groupe motopropulseur » désigne la portion de puissance donnée par l'assistance électrique par rapport à la puissance donnée par le cycliste. Il peut être calculé comme étant la puissance de l'ensemble des deux moteurs divisée par la somme de la puissance de l'ensemble des deux moteurs et de la puissance du cycliste. Il peut aussi être appelé « paramètre de niveau d'assistance ». C'est un paramètre qui peut être commandé manuellement par le cycliste via une interface de contrôle ou calculé automatiquement par l'unité de contrôle en fonction d'autres paramètres.

Dans le cadre du présent document, une mesure de position angulaire est équivalente à une mesure de vitesse angulaire. En effet, le groupe motopropulseur comprend de préférence un moyen pour déterminer la vitesse angulaire d'un des moteurs à partir de la position angulaire de ce moteur. Il n'y a pas de différence fondamentale entre un contrôle en position et un contrôle en vitesse car il existe un lien mathématique direct entre les deux valeurs. La vitesse angulaire est la dérivée temporelle de la position angulaire. Par exemple, contrôler un moteur pour qu'il tourne à une vitesse angulaire constante revient à contrôler un moteur pour qu'il suive une position angulaire évoluant linéairement en fonction du temps.

Dans le cadre du présent document, une mesure de courant est équivalente à une mesure de couple. Plus spécifiquement, une mesure du courant dans les phases d'un moteur est équivalente à une mesure de couple. En effet, le groupe motopropulseur comprend de préférence un moyen pour déterminer le couple d'un des moteurs à partir du courant fourni à ce moteur.

Dans le cadre du présent document, les termes « amont » et « aval » doivent être compris dans le sens où un élément amont est plus proche de la source de puissance et un élément aval est plus proche d'un élément entraîné en sortie.

L'usage, dans ce document, du verbe « comprendre », de ses variantes, ainsi que ses conjugaisons, ne peut en aucune façon exclure la présence d'éléments autres que ceux mentionnés. L'usage, dans ce document, de l'article indéfini « un », « une », ou de l'article défini « le », « la » ou « l' », pour introduire un élément n'exclut pas la présence d'une pluralité de ces éléments.

Les termes « premier », « deuxième », « troisième », etc. sont, quant à eux, utilisés dans le cadre de ce document exclusivement pour différencier différents éléments, et ce sans impliquer d'ordre entre ces éléments.

L'ensemble des modes de réalisation préférés ainsi que l'ensemble des avantages du procédé de contrôle du groupe motopropulseur selon l'invention se transposent mutatis mutandis au présent groupe motopropulseur et au véhicule, et inversement. Les différents modes de réalisation peuvent être considérés seuls ou en combinaison.

### Brève description des figures

D'autres caractéristiques et avantages de la présente invention apparaîtront à la lecture de la description détaillée qui suit pour la compréhension de laquelle on se reportera aux figures annexées qui montrent :
- la figure 1, un exemple de vue fonctionnelle d'un ensemble de propulsion dans laquelle le procédé est implémenté ;
- la figure 2, une vue fonctionnelle détaillée de la figure 1 ;
- la figure 3, une autre vue fonctionnelle détaillée de la figure 1.

Les dessins des figures ne sont pas à l'échelle. Des éléments semblables sont en général dénotés par des références semblables dans les figures. Dans le cadre du présent document, les éléments identiques ou analogues peuvent porter les mêmes références. En outre, la présence de numéros ou lettres de référence aux dessins ne peut être considérée comme limitative, y compris lorsque ces numéros ou lettres sont indiqués dans les revendications.

### Description détaillée de modes de réalisation de l'invention

L'invention se rapporte à un procédé de contrôle d'un groupe motopropulseur d'un ensemble de propulsion de véhicule à pédales, le groupe comprenant un premier moteur et un deuxième moteur, le deuxième moteur étant un moteur de régulation d'assistance. Le procédé comprend en particulier une étape d'interruption du pédalage puis une reprise de pédalage par un utilisateur, une étape de calcul d'une première vitesse en un point défini de l'ensemble de propulsion, en aval du système différentiel, en fonction de la vitesse du premier moteur et du deuxième moteur, une étape de calcul d'une deuxième vitesse au point défini de l'ensemble de propulsion en fonction d'une mesure de la vitesse du véhicule, une étape de calcul d'une différence entre la première vitesse et la deuxième vitesse, une étape de contrôle d'un premier moteur du groupe motopropulseur par une unité de contrôle, l'unité de contrôle contrôlant le premier moteur en vitesse. Le procédé comprend aussi une étape de contrôle du deuxième moteur par l'unité de contrôle avec une consigne de couple inférieur en valeur absolue au couple correspondant au niveau d'assistance lorsque la différence entre la première vitesse et de la deuxième vitesse est au-dessus d'un certain seuil, et une étape de contrôle du deuxième moteur par l'unité de contrôle avec une consigne de couple correspondant au niveau d'assistance que lorsque la différence entre la première vitesse et de la deuxième vitesse est en-dessous d'un certain seuil. Ceci permet une reprise de pédalage agréable et d'arriver à atteindre le rapport de vitesse désiré d'une manière la plus fluide possible.

Le procédé selon l'invention diffère de l'art antérieur et en particulier du document WO2013/160477 (ou US2015122565) car le procédé met en oeuvre un calcul de plusieurs vitesses (en fonction d'autres critères) en un même point, nommé point défini. Dans l'art antérieur, la définition d'un tel point n'est pas prévue. Le procédé vise aussi un moment particulier de l'utilisation du véhicule à pédales, à savoir la reprise du pédalage. Et le procédé de contrôle prévoit de réaliser la reprise du pédalage en deux phases. Le procédé prévoit de retarder dans une première phase (ou phase transitoire) l'application d'un couple correspondant au niveau d'assistance requis par l'utilisateur, avant d'appliquer, dans une deuxième phase, le couple correspondant au niveau d'assistance requis. Au cours de la première phase, le deuxième moteur n'est pas contrôlé avec la consigne de couple correspondant au niveau d'assistance requis par l'utilisateur alors même que l'utilisateur a requis un niveau d'assistance. En d'autres termes, au cours de la première phase, le deuxième moteur est contrôlé avec une consigne de couple différente de celle correspondant au niveau d'assistance effectivement requis par l'utilisateur. Ce n'est que dans la deuxième phase que le deuxième moteur est contrôlé avec la consigne de couple correspondant au niveau d'assistance requis par l'utilisateur. Ainsi l'invention ne vise pas une commande générique de deux moteurs mais une reprise du pédalage en deux phases permettant une reprise de pédalage agréable et l'atteinte du rapport de vitesse désiré d'une manière la plus fluide possible.

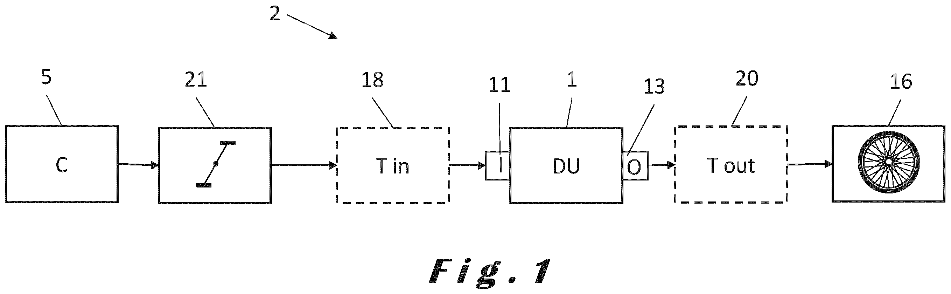

La figure 1 est un exemple de vue fonctionnelle d'un ensemble de propulsion 2 dans lequel le procédé est implémenté. L'ensemble de propulsion 2 est appliqué à un véhicule à pédales. L'ensemble de propulsion 2 est schématisé entre un cycliste 5 (C) et une roue arrière 16 (avec une vitesse angulaire ωW). Le véhicule à pédales peut par exemple être un vélo, un tricycle ou autres. Il s'agit en particulier de vélo, tricycle ou autres à assistance électrique. L'ensemble de propulsion 2 comprend un pédalier 21 (comprenant des pédales) actionné par le cycliste 5. Le pédalier permet au cycliste d'entraîner le véhicule avec ou non la régulation d'assistance de moteurs électriques décrits par la suite. L'ensemble de propulsion 2 comprend un groupe motopropulseur 1 (DU) qui peut être situé au niveau du pédalier 21 (ensemble de propulsion 2 de type « middrive »). Le groupe motopropulseur 1 peut être situé en d'autres positions. Par exemple, le groupe motopropulseur 1 peut être situé dans le moyeu d'une roue arrière 16 du véhicule (ensemble de propulsion de type « hub drive »). Dans d'autres cas, par exemple des véhicules de type cargo à deux roues, tricycle ou quadricycle, le groupe motopropulseur 1 peut être entre le pédalier et l'axe des roues arrière du véhicule.

Le groupe motopropulseur 1 peut comprendre, un corps d'entrée 11 et un corps de sortie 13. Le pédalier 21 peut être confondu avec le corps d'entrée 11 du groupe motopropulseur 1. Alternativement, le corps de sortie 13 peut être confondu avec la jante de la roue 16.

L'ensemble de propulsion 2 peut comprendre une transmission amont 18 (Tin) entre le pédalier 21 et le corps d'entrée 11 du groupe motopropulseur 1. La transmission amont 18 connecte le pédalier 21 et le corps d'entrée 11 ensemble. La transmission amont 18 peut être une chaîne, une courroie ou tout type d'élément de transmission. La transmission amont peut modifier la vitesse angulaire wCK du pédalier (ou de l'axe du pédalier) en une vitesse angulaire ωI. La transmission amont 18 peut être optionnelle.

L'ensemble de propulsion 2 peut comprendre une transmission aval 20 (Tout) entre le corps de sortie 13 du groupe motopropulseur 1 et une ou des roues arrière 16 du véhicule. La transmission aval 20 connecte le corps de sortie 13 et une ou des roues arrière 16 ensembles. La transmission aval peut modifier la vitesse angulaire wO du corps de sortie 13 en une vitesse angulaire wTO. La transmission aval 20 peut être optionnelle.

Ainsi, dans l'ensemble de propulsion 2 de type "middrive" d'un véhicule avec groupe motopropulseur 1 situé au niveau du pédalier 21, le pédalier 21 peut être confondu avec le corps d'entée 11 (et donc la transmission amont 18 absente) et la transmission aval 20 peut être une chaîne ou une courroie connectant le corps de sortie 13 du groupe motopropulseur 1 à la roue arrière. Dans l'ensemble de propulsion 2 de type « hub drive », la transmission amont 18 peut être une chaîne ou une courroie connectant le pédalier 21 et le corps d'entrée 11 du groupe motopropulseur 1 et le corps de sortie 13 peut être confondu avec la jante de la roue arrière 16 (et donc la transmission aval 20 absente). Alternativement encore, la transmission amont 18 peut être une première chaîne ou une courroie (ou tout autre type d'élément de transmission) connectant le pédalier 21 au corps d'entrée 11 du groupe motopropulseur 1 et la transmission aval 20 peut être une chaîne ou une courroie (ou tout autre type d'élément de transmission) connectant le corps de sortie 13 du groupe motopropulseur 1 à la roue arrière 16. Cette configuration d'ensemble de propulsion pourrait être utilisée dans certain vélo spécifique, nommant les vélos cargos.

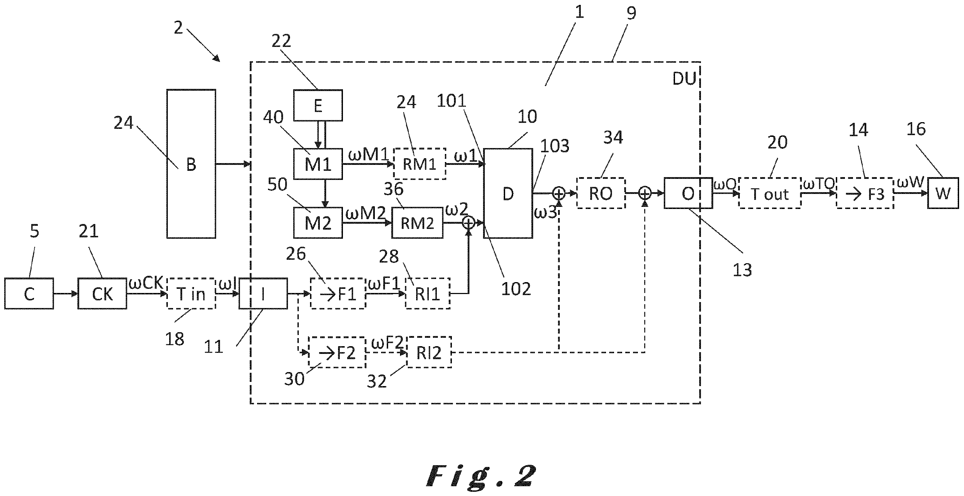

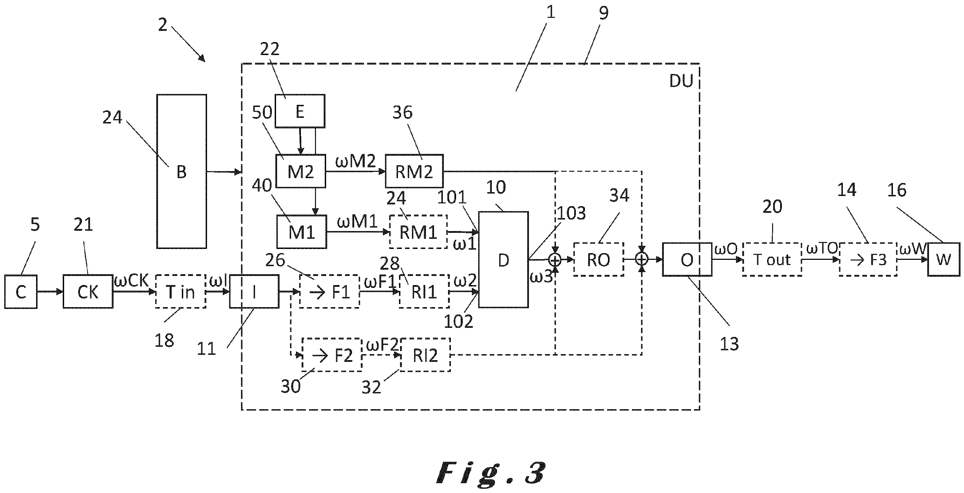

Les figures 2 et 3 montrent différentes vues fonctionnelles détaillées de la figure 1. Le groupe motopropulseur 1 comprend un premier moteur 40 (M1) et un deuxième moteur 50 (M2). Le groupe motopropulseur 1 peut comprendre un élément de mesure de courant du premier moteur 40 et un élément de mesure de courant du deuxième moteur 50. Le groupe motopropulseur 1 comprend en outre une unité de contrôle 22. L'unité de contrôle 22 est connectée au premier moteur 40, au deuxième moteur 50 et est agencée pour contrôler le premier moteur et le deuxième moteur. La position angulaire du premier moteur et du deuxième moteur peut être déterminée par des éléments de mesure. Les éléments de mesure sont par exemple des aimants en rotation sur les arbres des moteurs en regard de capteurs magnétiques, ou plus généralement tout type d'encodeurs optiques, magnétiques, etc. L'unité de contrôle 22 contrôle le premier moteur 40 et le deuxième moteur 50 sur base de la position angulaire du premier moteur 40, de la position angulaire du deuxième moteur 50, du courant du premier moteur 40 et du courant du deuxième moteur 50, ces informations lui ayant été fournies par les éléments de mesures. L'unité de contrôle 22 contrôle de préférence le premier moteur 40 en position angulaire ou en vitesse angulaire. L'unité de contrôle 22 contrôle de préférence le deuxième moteur 50 en courant ou en couple.

De préférence, l'ensemble de propulsion 2 comprend une ou plusieurs batteries 24 alimentant en électricité tout objet ou élément le nécessitant de l'ensemble de propulsion 2 ou plus spécifiquement du groupe motopropulseur 1, tels que les moteurs 40, 50, l'unité de contrôle 22, des capteurs, etc.

Le premier moteur 40 peut avoir pour rôle de gérer le rapport de vitesse du groupe motopropulseur 1. Une de ses fonctions est d'offrir un rapport de transmission donné. Ce rapport de transmission est le rapport entre la vitesse angulaire du corps de sortie 13 du groupe motopropulseur 1 et la vitesse angulaire du corps d'entrée 11 du groupe motopropulseur 1. Ce rapport de transmission peut par exemple être déterminé sur base d'un paramètre de rapport de vitesses fourni par le cycliste ou être déterminé par l'unité de contrôle 22 afin d'offrir un changement de vitesse automatique au cycliste. Cette détermination peut notamment être réalisée par un algorithme de passage de vitesses. Le premier moteur 40 est de préférence contrôlé en position angulaire ou en vitesse angulaire, par exemple via l'unité de contrôle 22 qui contrôle le premier moteur de telle sorte qu'une consigne de position angulaire ou de vitesse angulaire soit respectée.

Le deuxième moteur 50 peut avoir pour rôle de gérer le bon niveau de régulation d'assistance du groupe motopropulseur. Une de ses fonctions est d'assister le mouvement du cycliste en ajoutant du couple à celui fourni par le cycliste et par le premier moteur. En d'autres termes, la puissance fournie par le deuxième moteur s'ajoute à la puissance fournie par le cycliste et par le premier moteur. De préférence, le niveau d'assistance est déterminé par l'unité de contrôle 22 sur base notamment d'un paramètre de niveau d'assistance. Le paramètre de niveau d'assistance peut être déterminé par le cycliste ou de façon automatique par l'unité de contrôle 22 du groupe motopropulseur. Le deuxième moteur est de préférence contrôlé en courant ou en couple, par exemple via l'unité de contrôle 22 qui contrôle le deuxième moteur de telle sorte qu'une consigne de courant ou de couple soit respectée. En outre, le l'unité de contrôle 22 peut contrôler le deuxième moteur selon une consigne de couple avec une régulation.

Le groupe motopropulseur combine une assistance électrique et une boite de vitesse automatique. Le groupe motopropulseur fournit un rapport de transmission variable de façon continue.

L'unité de contrôle 22 peut être agencée pour déterminer une consigne de vitesse de rotation et pour imposer ladite consigne de vitesse de rotation au premier moteur 40, la consigne de vitesse de rotation étant déterminée comme directement proportionnelle à la vitesse de rotation du corps d'entrée 11 obtenue par calcul sur base de la position angulaire du premier moteur 40 et/ou du deuxième moteur 50 et au paramètre de rapport de vitesse. L'unité de contrôle 22 peut se baser en outre sur le paramètre de rapport de vitesse et le paramètre de niveau d'assistance du groupe motopropulseur pour contrôler le deuxième moteur 50. L'unité de contrôle 22 peut être agencée pour déterminer une consigne de courant ou de couple et pour imposer ladite consigne de courant ou de couple au deuxième moteur 50. La consigne de courant ou de couple du deuxième moteur est déterminée en tenant compte d'un ou plusieurs critères parmi notamment le couple ou le courant du premier moteur obtenu par l'élément de mesure du courant du premier moteur, la vitesse du premier moteur, la vitesse du deuxième moteur, le paramètre de rapport de vitesse du groupe motopropulseur et le paramètre de niveau d'assistance du groupe motopropulseur.

Le groupe motopropulseur 1 peut comprendre en outre un système différentiel 10 (D). L'utilisation d'un système différentiel 10 permet un changement du rapport de vitesse continu entre la rotation du corps de sortie 13 et la rotation fournie par le cycliste au corps d'entrée 11. Le système différentiel 10 peut comprendre un premier élément d'entrée 101 (avec une vitesse angulaire w1), un deuxième élément d'entrée 102 (avec une vitesse angulaire w2) et un élément de sortie 103 (avec une vitesse angulaire w3).

Le corps d'entrée 11 peut être relié au deuxième élément d'entrée 102 du système différentiel 10. Le corps d'entrée 11 transmet la puissance fournie par le cycliste en entrée du système différentiel 10. Le corps d'entrée 11 peut entraîner le deuxième élément d'entrée 102, de préférence avec un rapport fixe. Le corps d'entrée 11 peut être relié indirectement au deuxième élément d'entrée 102 par l'intermédiaire d'une première roue libre 26 (F1). La fonction de la roue libre 26 est que le pédalier 21 puisse entraîner l'élément d'entrée 102 du système différentiel mais que le deuxième moteur 50 ne puisse pas entraîner le pédalier 21. Le corps d'entrée 11 peut être relié indirectement au deuxième élément d'entrée 102 par l'intermédiaire d'un réducteur 28 (RI1), modifiant la vitesse angulaire wF1 de la première roue libre 26. Alternativement le corps d'entrée 11 peut être relié directement au deuxième élément d'entrée 102 - une connexion établissant le lien entre le corps d'entrée 11 et le deuxième élément d'entrée 102.

Le corps d'entrée 11 peut être relié indirectement au corps de sortie 13 par l'intermédiaire d'une deuxième roue libre 30 (F2). Le corps d'entrée 11 transmet la puissance fournie par le cycliste en sortie du groupe motopropulseur 1. Ceci permet par exemple au cycliste de faire avancer le véhicule à pédales sans l'intervention des moteurs 40, 50 - avantageux en cas de panne de ces derniers. Le corps d'entrée 11 peut être relié indirectement au corps de sortie 13 par l'intermédiaire d'un réducteur 32 (RI2), modifiant (c'est-à-dire multipliant ou démultipliant) la vitesse angulaire wF2 de la deuxième roue libre 30. Le corps d'entrée 11 peut être relié indirectement au corps de sortie 13 par l'intermédiaire d'un réducteur 34 (R0).

Le premier moteur 40 peut être relié au premier élément d'entrée 101 du système différentiel 10. Le premier moteur 40 peut entraîner le premier élément d'entrée 101, de préférence avec un rapport fixe. Le premier moteur 40 permet alors de gérer le rapport de vitesse du groupe motopropulseur 1. Le premier moteur 40 peut être relié indirectement au premier élément d'entrée 101 par l'intermédiaire d'un réducteur 24 (RM1). Le réducteur 24 modifie la vitesse angulaire ωM1 du premier moteur 40 en une vitesse angulaire ω1. Alternativement, le premier moteur 40 peut être relié directement au premier élément d'entrée 101, sans le réducteur 24, la vitesse angulaire ωM1 du premier moteur 40 correspondant à la vitesse angulaire w1.

Le deuxième moteur 50 peut être relié au deuxième élément d'entrée 102 du système différentiel 10 (selon la figure 2). Le deuxième moteur 50 peut entraîner le deuxième élément d'entrée 102, de préférence avec un rapport fixe. Le deuxième moteur 50 permet de gérer le bon niveau de régulation d'assistance depuis l'entrée du système différentiel 10. Le deuxième moteur 50 peut être relié indirectement au deuxième élément d'entrée 102 par l'intermédiaire d'un réducteur 36 (RM2). Le réducteur 36 modifie (c'est-à-dire multiplie ou démultiplie) la vitesse angulaire ωM2 du deuxième moteur 50.

Le deuxième moteur 50 peut aussi être relié au corps de sortie 13 du groupe motopropulseur 1. Le deuxième moteur 50 peut entraîner le corps de sortie 13, de préférence avec un rapport fixe. Le deuxième moteur 50 permet de gérer le bon niveau de régulation d'assistance depuis la sortie du système différentiel 10. Le deuxième moteur 50 peut être relié indirectement au corps de sortie 13 par l'intermédiaire du réducteur 36 (RM2). Le réducteur 36 modifie (c'est-à-dire multiplie ou démultiplie) la vitesse angulaire ωM2 du deuxième moteur 50. Le réducteur permet de démultiplier le couple provenant du deuxième moteur. Le deuxième moteur 50 peut aussi être relié indirectement au corps de sortie 13 par l'intermédiaire du réducteur 34 (RO).

Ainsi, sur le deuxième élément d'entrée du système différentiel 10, la vitesse angulaire w2 peut être une vitesse angulaire provenant du pédalier 21 (figure 3) ou être une vitesse angulaire provenant du pédalier 21 égale (car mécaniquement connectée) à celle provenant du deuxième moteur 50 (figure 2).

L'ensemble de propulsion 2 peut comporter en outre une troisième roue libre 14 (F3). La troisième roue libre 14 est située de préférence entre le pédalier 21 et une roue arrière 16 du véhicule à pédales, la roue libre étant apte à coupler (synchroniser) ou découpler (désynchroniser) la roue arrière et le pédalier. La roue libre permet l'interruption du pédalage (et l'interruption de la rotation de l'axe de pédalier 21) tout en laissant le véhicule poursuivre son mouvement. La roue libre est par exemple située entre l'élément de sortie 103 du système différentiel et la roue arrière 16. La roue libre 14 est située par exemple en aval du corps de sortie 13. La roue libre 14 est située par exemple en aval de la transmission aval 20, le cas échéant. La troisième roue libre 14 est située par exemple dans le moyeu de la roue arrière.

Le système différentiel 10 peut être à titre d'exemple un train épicycloïdal. Le train épicycloïdal comprend un planétaire, une couronne et un porte-satellite et un ou des satellites, portés par le porte-satellite, entre le planétaire et la couronne. Le premier élément d'entrée 101 peut être le planétaire. Le deuxième élément d'entrée 102 peut être la couronne et l'élément de sortie 103 peut être le porte-satellite. Alternativement, le deuxième élément d'entrée 102 peut être le porte-satellite et l'élément de sortie 103 peut être la couronne.

Le système différentiel 10 peut aussi être, à titre d'exemple, un train cycloïdal. Dans une première version, le train cycloïdal comprend une couronne, une excentrique d'excitation, une roue, des excentriques de transfert et un porte excentrique de transfert. Le premier élément d'entrée peut être l'excentrique de d'excitation. Le deuxième élément d'entrée peut être la couronne et l'élément de sortie peut être le porte excentrique de transfert. Alternativement, le deuxième élément d'entrée peut être le porte excentrique de transfert et l'élément de sortie peut être la couronne.

Dans une deuxième version, le train cycloïdal comprend une couronne, une excentrique d'excitation, une roue (à double denture), un pignon. Le premier élément d'entrée peut être l'excentrique d'excitation. Le deuxième élément d'entrée peut être la couronne et l'élément de sortie peut être le pignon. Alternativement, le deuxième élément d'entrée peut être le pignon et l'élément de sortie peut être la couronne.

Le système différentiel 10 peut aussi être, à titre d'exemple, un train harmonique. Le train harmonique comprend une couronne, un générateur d'onde, une roue flexible. Le premier élément d'entrée peut être le générateur d'onde. Le deuxième élément d'entrée peut être la couronne et l'élément de sortie peut être roue flexible. Alternativement, le deuxième élément d'entrée peut être la roue flexible et l'élément de sortie peut être la couronne.

Le groupe motopropulseur 1 peut être dans un boîtier 9. Le corps d'entrée 11 et le corps de sortie 13 peuvent marquer les interfaces entre l'intérieur et l'extérieur du boîtier 9. Les moteurs 40, 50, le système différentiel 10, l'unité de contrôle 22, etc. peuvent être dans le boîtier 9 afin de les protéger contre l'environnement. Le groupe motopropulseur combine une assistance électrique et une boite de vitesse automatique dans un même boitier.

Le contrôle du premier moteur 40 et deuxième moteur 50 peut par exemple être réalisé de la façon suivante.

Lors de l'utilisation du véhicule, le cycliste peut entraîner le véhicule en pédalant (et en étant assisté par le premier et deuxième moteur qui ajoutent un couple à celui fourni par le cycliste) et peut interrompre le pédalage tout en ayant le véhicule continuant son mouvement, en roue libre. Lorsque le pédalage s'interrompt, le premier moteur 40 et le deuxième moteur 50 s'interrompent - possiblement jusqu'à l'arrêt, selon la durée de l'interruption de pédalage et l'inertie des rotors respectifs. Lors d'une reprise de pédalage, le premier moteur 40 accélère rapidement depuis l'arrêt jusqu'à sa vitesse de consigne contrôlée par l'unité de contrôle 22. Ceci est en particulier le cas à haute vitesse et/ou à haut rapport de vitesse. Cette accélération brutale demande une grande puissance instantanée PM1. Si le niveau d'assistance fourni AF (correspondant à la puissance d'assistance divisée par la puissance du cycliste) fournie par le deuxième moteur 50 est faible (par choix ou par contrainte), il se peut que le deuxième moteur 50 doive freiner pour assurer le niveau d'assistance. Ce phénomène peut être illustré par ce calcul suivant. Le calcul, donné à titre illustratif, fait certaines hypothèses, notamment l'abstraction des pertes. Avec Preq la puissance requise, PM2 la puissance du deuxième moteur 50, Pmot la somme des puissances des deux moteurs 40, 50 et Pcycl la puissance du cycliste utilisateur : Preq= Pcycl*(1+AF).
Si on veut satisfaire Preq on a: Preq= Pcycl+Pmot
Donc : Pmot = PM1+PM2 = Pcycl*AF
Si PM1 > Pcycl*AF, alors PM2 < 0

Un exemple qui illustre ce problème est qu'en cas d'assistance nulle, AF= 0. Alors dans ce cas, PM2 = - PM1. Du fait que le premier moteur 40 accélère rapidement depuis l'arrêt jusqu'à sa vitesse de consigne, cela se traduit par le fait que le deuxième moteur 50 doive freiner - ce qui est accentué à haute vitesse et/ou à haut rapport de vitesse. Ceci est désagréable pour le cycliste, car à l'instant où le cycliste opère une reprise de pédalage alors que le vélo est déjà en mouvement, il s'attend à une résistance nulle car il doit encore "rattraper" la roue libre. Si rien n'est fait pour atténuer ou éviter ce phénomène, le cycliste ressent une sensation de blocage du pédalier pendant un court instant, le temps que le premier moteur 40 atteigne sa consigne de vitesse.

Ainsi, lors d'une reprise de pédalage par le cycliste après une interruption du pédalage (tout en ayant le véhicule en mouvement), le procédé comprend une étape de contrôle du premier moteur 40 par l'unité de contrôle 22, l'unité de contrôle 22 contrôlant le premier moteur 40 en vitesse. En parallèle, ou simultanément, le procédé comprend un calcul d'une première vitesse A en un point défini de l'ensemble de propulsion, en fonction de la vitesse du premier moteur 40 et du deuxième moteur 50, ainsi qu'un calcul d'une deuxième vitesse B au point défini de l'ensemble de propulsion en fonction d'une mesure de la vitesse du véhicule. Les vitesses A et B sont calculées au même point, qui est ledit point défini.

Le point défini est de préférence en aval du système différentiel 10. En d'autres termes, le long de l'ensemble de propulsion 2, le point défini est après le système différentiel, ou en d'autres termes après l'élément de sortie 103 du système différentiel 10.

Le point défini peut être par exemple entre l'élément de sortie 103 et le réducteur 34 (ce qui correspond par exemple au calcul de ω3), entre le réducteur 34 et le corps de sortie 13, entre le corps de sortie 13 et la transmission aval 20 (ce qui correspond par exemple au calcul de ωO), entre la transmission aval 20 et la roue libre 14 (ce qui correspond par exemple au calcul de wTO) ou encore, entre la roue libre 14 et la roue arrière 16 (ce qui correspond par exemple au calcul de ωW).

Le calcul de la première vitesse A et le calcul de la deuxième vitesse B (par l'unité de contrôle 22) sont faits selon les caractéristiques des éléments - connectés ou reliés ensemble - décrits ci-dessus, formant une chaîne cinématique de l'ensemble de propulsion.

La première vitesse A est calculée de manière effective lorsque le point défini est en amont de la roue libre 14, entre l'élément de sortie 103 et la roue libre 14. La première vitesse A est calculée de manière fictive (ou extrapolée) lorsque le point défini est en aval de la roue libre 14, entre la roue libre 14 et la roue arrière 16, car dans ce cas le calcul est effectué avec l'hypothèse que la roue libre 14 transmet le mouvement le long de la chaîne cinématique (état de couplage). La deuxième vitesse B est calculée de manière effective lorsque le point défini est en aval de la roue libre 14, entre la roue libre 14 et la roue arrière 16. La deuxième vitesse B est calculée de manière fictive (ou extrapolée) lorsque le point défini est en amont de la roue libre 14, entre l'élément de sortie 103 et la roue libre 14. Car dans ce cas le calcul est effectuée avec l'hypothèse que la roue libre 14 transmet le mouvement le long de la chaîne cinématique (état de couplage). Ainsi, dans le calcul de la première vitesse A et de la deuxième vitesse B, l'une sera calculée de manière effective et l'autre de manière fictive - selon la position du point défini.

Le procédé comprend aussi un calcul d'une différence entre la première vitesse A et la deuxième vitesse B. La différence renseigne (en particulier l'unité de contrôle 22) sur l'état de la roue libre 14. Si la différence est nulle, la roue libre 14 transmet le mouvement (de l'ensemble de propulsion) vers la roue arrière. Ceci correspond à un état de couplage (ou de synchronisation). Si la différence n'est pas nulle, la roue libre 14 interrompt le mouvement (de l'ensemble de propulsion) vers la roue arrière. Ceci correspond à un état de découplage (ou désynchronisation).

Le procédé comprend aussi une étape de contrôle du deuxième moteur 50 avec une consigne de couple inférieur en valeur absolue au couple correspondant à un niveau d'assistance lorsque la différence entre la première vitesse A et de la deuxième vitesse B est au-dessus d'un certain seuil (le couple de la consigne est inférieur en valeur absolue au couple correspondant à un niveau d'assistance). Le procédé comprend aussi une étape de contrôle du deuxième moteur 50 par l'unité de contrôle 22 avec une consigne de couple correspondant à un niveau d'assistance que lorsque la différence entre la première vitesse A et de la deuxième vitesse B est en-dessous d'un certain seuil. Ainsi, le procédé de contrôle du groupe motopropulseur permet de ne pas asservir le deuxième moteur 50 au niveau d'assistance requis pendant que le premier moteur 40 accélère pour atteindre sa vitesse de consigne. Durant cette première phase - ou phase transitoire - le deuxième moteur n'est pas asservi avec le niveau requis d'assistance. Ce n'est qu'après que le premier moteur 40 approche, voire atteint, sa vitesse de consigne que le procédé de contrôle asservi le deuxième moteur 50 au niveau d'assistance requis. Quand la différence entre la première vitesse A et de la deuxième vitesse B est en dessous du seuil, on passe au mode de fonctionnement normal du groupe motopropulseur, avec une régulation d'assistance par le deuxième moteur en lien avec le souhait du cycliste. Durant cette deuxième phase, le deuxième moteur est asservi avec le niveau requis d'assistance. Cet asservissement est donc retardé durant la reprise de pédalage. Ceci permet de réduire voire éviter que le deuxième moteur 50 freine. Ceci permet de réduire voire annuler la gêne occasionnée par la sensation de blocage du pédalier lors de la reprise de pédalage.

La reprise de pédalage correspond au moment où le cycliste applique à nouveau une action sur le pédalier 21 - en particulier les pédales - tout en ayant le véhicule en mouvement. La reprise de pédalage débute une phase transitoire qui aura pour effet de resynchroniser/coupler le pédalier et une des roues arrière.

Le seuil en-dessous ou au-dessus duquel le contrôle du deuxième moteur est réalisé avec la consigne de couple correspondant au niveau d'assistance requis peut être déterminé de plusieurs façons. A titre d'exemple le seuil est déterminé de la façon suivante. Le seuil peut être fixe. Le seuil peut être déterminé sur la base de la précision des éléments de mesure de la vitesse (tel qu'un capteur de vitesse) et une mise au point (par un calibreur par exemple) pour améliorer le ressenti du cycliste à la reprise du pédalage. Le seuil peut aussi être variable. Le seuil peut être déterminé sur la base de ces mêmes éléments, de l'accélération du premier moteur ou de la transmission amont et/ou aval (à quelle vitesse la roue libre est rattrapée), et la vitesse du véhicule.

Outre la prise en compte des caractéristiques des éléments de l'ensemble de propulsion 2 selon la position du point défini, la première vitesse A est établie, calculée par l'unité de contrôle 22 sur base des vitesses de rotation du premier moteur 40 et du deuxième moteur 50.

Outre la prise en compte des caractéristiques des éléments de l'ensemble de propulsion 2 selon la position du point défini, la deuxième vitesse B est calculée par l'unité de contrôle 22 grâce à un ou des éléments de mesure de la vitesse du véhicule, tels que des capteurs de roue du véhicule. Le ou les capteurs sur une ou des roues du véhicule fournissent à l'unité de contrôle 22 des informations permettant de calculer la vitesse réelle du véhicule. D'autres moyens sont possibles tels que par l'évolution de la position GPS.

De préférence, mais à titre d'exemple, lorsque la différence entre la première vitesse A et de la deuxième vitesse B est au-dessus d'un certain seuil, la consigne de couple est à un couple nul. Ceci permet une reprise de pédalage particulièrement agréable et d'arriver à atteindre le rapport de vitesse désiré d'une manière encore plus fluide possible. D'autres valeurs de la consigne de couple qu'un couple nul sont possibles, comprise entre zéro et une valeur inférieure en valeur absolue au couple correspondant au niveau d'assistance, pour autant que la reprise de pédalage soit agréable et que l'atteinte du rapport de vitesse désiré soit fluide.

Le procédé peut en outre comprendre un contrôle du premier moteur adapté pour accélérer la réduction de l'écart entre la consigne de vitesse et la valeur réelle de la vitesse du premier moteur. Ceci permet de réduire le temps durant lequel le contrôle du deuxième moteur est avec une consigne de couple inférieur en valeur absolue au couple correspondant au niveau d'assistance. Ceci permet une reprise de pédalage agréable et d'arriver à atteindre le rapport de vitesse désiré d'une manière la plus rapide et fluide possible. En outre, lors d'une reprise de pédalage, notamment à haute vitesse, le chaîne prend un certain temps à rattraper la roue arrière et cela peut être ressenti comme du pédalage dans le vide par le cycliste. En rattrapant plus vite la vitesse de consigne, on diminue cette impression de pédaler dans le vide à la reprise. Quand bien même la durée de la première phase - ou phase transitoire - peut être variable, le procédé peut permettre de l'écourter selon ce mode de réalisation non limitatif.

Par exemple, ceci peut être réalisé par l'unité de contrôle 22 contrôlant le premier moteur avec une valeur de consigne de vitesse plus élevée que la valeur de consigne de vitesse visée. Alternativement, le gain proportionnel de la loi de régulation du premier moteur est momentanément plus élevé que le gain proportionnel en mode de fonctionnement normal.

Le procédé peut être mis en oeuvre par l'unité de contrôle 22.

L'invention se rapporte au procédé de contrôle du groupe motopropulseur, au groupe motopropulseur apte à mettre en oeuvre le procédé et au véhicule à pédales comprenant le groupe motopropulseur.

Le procédé se rapportant au contrôle du groupe motopropulseur, le procédé se rapporte alors aussi au contrôle de l'ensemble de propulsion comprenant le groupe motopropulseur et aussi au contrôle du véhicule à pédales comprenant l'ensemble de propulsion. L'invention peut aussi se rapporter à l'ensemble de propulsion comportant le groupe motopropulseur. Les modes de réalisation préférés ainsi que l'ensemble des avantages décrits s'y appliquent.

La présente invention a été décrite en relation avec des modes de réalisations spécifiques, qui ont une valeur purement illustrative et ne doivent pas être considérés comme limitatifs. D'une manière générale, il apparaîtra évident pour un homme du métier que la présente invention n'est pas limitée aux exemples illustrés et/ou décrits ci-dessus.

## Revendications

1. Procédé de contrôle d'un groupe motopropulseur d'un ensemble de propulsion de véhicule à pédales, le groupe motopropulseur (1) comprenant
• Un système différentiel (10) comprenant un premier élément d'entrée (101), un deuxième élément d'entrée (102) et un élément de sortie (103),
• Un premier moteur (40) relié au premier élément d'entrée,
• Un deuxième moteur (50) relié au système différentiel (10),
• Une unité de contrôle (22) apte à contrôler le premier moteur selon une consigne de vitesse et apte à contrôler le deuxième moteur selon une consigne de couple correspondant à un niveau d'assistance,
• Un corps d'entrée (11) entraîné par un pédalier (21), le corps d'entrée étant relié au deuxième élément d'entrée (102) du système différentiel (10),
• Un corps de sortie (13) entraîné en rotation par l'élément de sortie (103) du système différentiel (10),
• Une roue libre (14) entre l'élément de sortie du système différentiel et une roue arrière du véhicule à pédales, la roue libre (14) est apte à coupler ou découpler la roue arrière et le pédalier,
le procédé comprenant
• Une interruption du pédalage puis une reprise de pédalage par le cycliste,
• Un calcul d'une première vitesse (A) en un point défini de l'ensemble de propulsion, en aval du système différentiel, en fonction de la vitesse du premier moteur et du deuxième moteur,
• Un calcul d'une deuxième vitesse (B) au point défini de l'ensemble de propulsion en fonction d'une mesure de la vitesse du véhicule,
• Un calcul d'une différence entre la première vitesse et la deuxième vitesse,
• Un contrôle du premier moteur (40) par l'unité de contrôle (22), l'unité de contrôle contrôlant le premier moteur (40) en vitesse,
• Un contrôle du deuxième moteur (50) par l'unité de contrôle (22) avec une consigne de couple inférieur en valeur absolue au couple correspondant au niveau d'assistance lorsque la différence entre la première vitesse (A) et de la deuxième vitesse (B) est au-dessus d'un certain seuil,
• Un contrôle du deuxième moteur (50) par l'unité de contrôle (22) avec une consigne de couple correspondant au niveau d'assistance que lorsque la différence entre la première vitesse (A) et de la deuxième vitesse (B) est en-dessous d'un certain seuil.

2. Procédé selon la revendication précédente, dans lequel lorsque la différence entre la première vitesse (A) et de la deuxième vitesse (B) est au-dessus d'un certain seuil, la consigne de couple est à un couple nul.

3. Procédé selon l'une des revendications précédentes, dans lequel, le contrôle du premier moteur (40) est adapté pour accélérer la réduction de l'écart entre la consigne de vitesse et la valeur réelle de la vitesse du premier moteur.

4. Procédé selon l'une des revendications précédentes, dans lequel la deuxième vitesse (B) est calculée par l'unité de contrôle (22) grâce à un ou des capteurs de roue du véhicule.

5. Procédé selon l'une des revendications précédentes, dans lequel la première vitesse (A) du véhicule est calculée par l'unité de contrôle (22) sur base des vitesses de rotation du premier moteur (40) et du deuxième moteur (50).

6. Procédé selon l'une des revendications précédentes, dans lequel la reprise de pédalage correspond au moment où le cycliste applique à nouveau une action sur le pédalier (21).

7. Procédé selon l'une des revendications précédentes, le système différentiel (10) du groupe motopropulseur est choisi dans le groupe comprenant :
- un train épicycloïdal avec un planétaire, une couronne et un porte-satellite, le premier élément d'entrée étant le planétaire, le deuxième élément d'entrée étant la couronne et l'élément de sortie étant le porte-satellite, ou le deuxième élément d'entrée étant le porte-satellite et l'élément de sortie étant la couronne,
- un train cycloïdal avec une couronne, une excentrique d'excitation, une roue, des excentriques de transfert et un porte excentrique de transfert, le premier élément d'entrée étant l'excentrique d'excitation, le deuxième élément d'entrée étant la couronne et l'élément de sortie étant le porte excentrique de transfert, ou le deuxième élément d'entrée étant le porte excentrique de transfert et l'élément de sortie étant la couronne,
- un train cycloïdal comprenant une couronne, une excentrique d'excitation, une roue à double denture et un pignon, le premier élément d'entrée étant l'excentrique d'excitation, le deuxième élément d'entrée étant la couronne et l'élément de sortie étant le pignon, ou le deuxième élément d'entrée étant le pignon et l'élément de sortie étant la couronne,
- un train harmonique comprenant une couronne, un générateur d'onde, une roue flexible, le premier élément d'entrée étant le générateur d'onde, le deuxième élément d'entrée étant la couronne et l'élément de sortie étant roue flexible, ou le deuxième élément d'entrée étant la roue flexible et l'élément de sortie étant la couronne.

8. Procédé selon l'une des revendications précédentes, dans lequel la différence entre la première vitesse et la deuxième vitesse renseigne sur l'état de couplage ou de découplage de la roue libre (14).

9. Procédé selon l'une des revendications précédentes, le deuxième moteur (50) étant relié au deuxième élément d'entrée du système différentiel (10) ou à l'élément de sortie du système différentiel (10).

10. Procédé selon l'une des revendications précédentes, le pédalier (21) étant relié au deuxième élément d'entrée.

11. Groupe motopropulseur (1) pour un véhicule à pédales, le groupe motopropulseur étant apte à mettre en oeuvre le procédé selon l'une des revendications précédentes.

12. Véhicule à pédales, comprenant l'ensemble de propulsion (2) comportant le groupe motopropulseur (1) selon la revendication précédente.

13. Le véhicule selon la revendication précédente, comprenant un pédalier (21), le groupe motoréducteur étant au niveau du pédalier.

14. Le véhicule selon la revendication 12, comprenant au moins une roue arrière, le groupe motoréducteur étant au niveau de l'axe de rotation de la roue arrière.
